# EUROPÄISCHE PATENTSCHRIFT

(11) **EP 3 386 643 B1**
(45) Veröffentlichungstag und Bekanntmachung des Hinweises auf die Patenterteilung: **04.05.2022**
(21) Anmeldenummer: 16809373.0
(22) Anmeldetag: 09.12.2016
(51) Int. Cl.: B05C 11/04

(54) **VERSTREICHEINHEIT**
SPREADING UNIT
UNITÉ D'APPLICATION

(30) Priorität: 09.12.2015 DE 102015121449
(43) Veröffentlichungstag der Anmeldung: 17.10.2018
(73) Patentinhaber: Broetje-Automation GmbH, 26180 Rastede (DE)
(72) Erfinder: PIDAN, Sergej, 71364 Winnenden (DE); RUPP, Kay, 70197 Stuttgart (DE)
(74) Vertreter: Gottschald Patentanwälte Partnerschaft mbB
(86) Internationale Anmeldenummer: PCT/EP2016/080358
(87) Internationale Veröffentlichungsnummer: WO 2017/097949

(56) Entgegenhaltungen:
- DE-A1-102005 055 162
- GB-A- 2 259 262
- JP-A- 2002 248 406
- JP-U- H03 109 673
- US-A- 4 899 687
- US-A1- 2013 142 955
- US-B1- 6 203 615

## Beschreibung

Die Erfindung betrifft ein System zum Verstreichen von viskosen Material gemäß dem Oberbegriff von Anspruch 1 sowie ein Verfahren zum Verstreichen eines viskosen Materials gemäß dem Oberbegriff von Anspruch 10.

Zum Aufbringen von viskosem Material, insbesondere Dichtungsmaterial wie bspw. Flugzeugdichtmassen oder silikonartigen Dichtungsmaterial, sind verschiedene Applikationseinheiten bekannt. Bspw. ist in der EP 2 896 463 A1 eine Formgebungsdüse zum Auftragen und Formen einer Dichtnaht auf einem Bauteil beschrieben. Mit einer Düse kann hier jeweils nur eine Naht mit einer düsenspezifischen Form geformt werden.

Darüber hinaus ist in der japanischen Druckschrift JP 2014-057638 A eine Verstreicheinheit zum Auftragen und Verstreichen von Dichtungsmaterial beschrieben. Diese Verstreicheinheit weist zwei Pinselabschnitte auf, welche zur Überbrückung von Absätzen in einem Bauteil manuell relativ zueinander verstellt werden können. Hiermit können zwei unterschiedliche hohe Abschnitte über einen Vorsprung hinweg oberflächenbehandelt werden. Für die Verstellung muss der Verstreichprozess unterbrochen werden. Darüber hinaus ist auch ein kontinuierliches Anpassen der Verstreicheinheit an sich verändernde Bauteilflächen nicht möglich.

Ein System mit den Merkmalen des Oberbegriffs des Anspruchs 1 ist z.B. aus der US 2013/142955 A1 bekannt.

Der Erfindung liegt das Problem zugrunde, ein bekanntes System mit einer Verstreicheinheit derart auszugestalten und weiterzubilden, dass viskoses Material auf einfache Art und Weise und flexibel an einem Bauteil verstrichen werden kann.

Gelöst wird diese Aufgabe durch ein System mit den Merkmalen von Anspruch 1.

Im Einzelnen wird dazu eine Verstreicheinheit mit einem Formgeber zum Verstreichen von viskosem Material auf einem Bauteil vorgeschlagen. Der Formgeber weist eine Formgebungskontur zum Formen des viskosen Materials beim Verstreichen auf. Dadurch, dass die Formgebungskontur des Formgebers zum Formen des viskosen Materials aktorbasiert verstellbar ist, kann die Formgebungskontur flexibel und einfach an das Bauteil angepasst werden. Vorzugsweise ist es möglich, die Formgebungskontur beim Verstreichen zu verstellen um die so erzeugte Naht an Bauteilerfordernisse anzupassen. Ein einfaches flexibles und kostengünstiges Verstreichen von viskosem Material wird hierdurch ermöglicht.

Bei dem viskosen Material kann es sich insbesondere um ein Dichtungsmaterial, insbesondere eine Flugzeugdichtmasse oder ein silikonartiges Dichtungsmaterial handeln. Das Bauteil ist vorzugsweise ein Zusammenbau von Teilen und das viskose Material wird vorzugsweise entlang eine Fuge der Teile des Zusammenbaus verstrichen.

Das Verstreichen des viskosen Materials kann durch eine Bewegung des Bauteils und/oder durch eine Bewegung der Verstreicheinheit erfolgen. Im Sinne einer flexiblen und einer zumindest teilautomatisierten Fertigung hat es sich als vorteilhaft erwiesen, wenn die Verstreicheinheit als Endeffektor für einen Manipulator, wie bspw. eine Portalmaschine und/oder einen Industrieroboter ausgebildet ist.

Zur Applikation des viskosen Materials auf dem Bauteil wird gemäß einer Weiterbildung der Erfindung vorgeschlagen, dass die Verstreicheinheit eine Düse aufweist. Bevorzugt weisen die Düse und der Formgeber einen festen Abstand auf. Auf diese Weise kann bspw. beim Ziehen von Nähten mit dem viskosen Material ein gleichmäßiges Abtrocknen und/oder Aushärten des viskosen Materials vom Zeitpunkt des Austritts aus der Düse bis zum Formen durch die Formgebungskontur erzielt werden. Hierdurch lässt sich die Nahtqualität auf einfache Weise steigern.

Gemäß einer weiteren Ausgestaltung der Erfindung weist die Verstreicheinheit einen Sensor zur Erkennung des zu überstreichenden Bereichs des Bauteils auf. Mit Hilfe des Sensors kann bspw. eine Fuge detektiert werden, welche mit dem viskosen Material überstrichen werden soll. Darüber hinaus ist ein Volumenstrom und/oder Massenstrom bestimmbar, welcher bspw. zum Auffüllen der Fuge benötigt wird.

Hier und vorzugsweise weist der Formgeber aktorbasiert verstellbare, insbesondere linear verstellbare, Stäbe zur Verstellung der Formgebungskontur auf. Auf diese Weise lassen sich sehr einfach verschiedene Formgebungskonturen sehr flexibel einstellen.

In einer Weiterbildung der Erfindung ist vorgesehen, dass der Formgeber einen Überzug aufweist, welcher die Formgebungskontur bereitstellt. Auf diese Art und Weise lässt sich eine kontinuierliche Formgebungskontur auf einfache Art und Weise realisieren.

Nach einer weiteren Lehre der Erfindung, welcher eigenständige Bedeutung zukommt, wird die oben genannte Aufgabe verfahrensmäßig durch die Merkmale von Anspruch 10 gelöst.

Es ergeben sich die gleichen Vorteile wie zuvor im Zusammenhang mit der Verstreicheinheit und dem System zum Verstreichen von viskosem Material beschrieben. Vorzugsweise wird das viskose Material automatisiert verstrichen.

Im Folgenden wird die Erfindung anhand einer lediglich ein Ausführungsbeispiel darstellenden Zeichnung näher erläutert. In der Zeichnung zeigt
- Fig. 1: in schematischer Darstellung eine Verstreicheinheit zum Verstreichen von viskosem Material,
- Fig. 2: eine schematische Darstellung einer ersten Ausführungsform des Formgebers in zwei Ansichten,
- Fig. 3: die Ausführungsform aus Fig. 2 mit unterschiedlich verstellter Formgebungskontur,
- Fig. 4: eine schematische Darstellung einer zweiten Ausführungsform des Formgebers in zwei Ansichten,
- Fig. 5: verschiedene Formgebungskonturen zum Auffüllen einer Fuge,
- Fig. 6: verschiedene mögliche weitere Formgebungskonturen zur Erzeugung unterschiedlicher Formen des Viskosenmaterials.

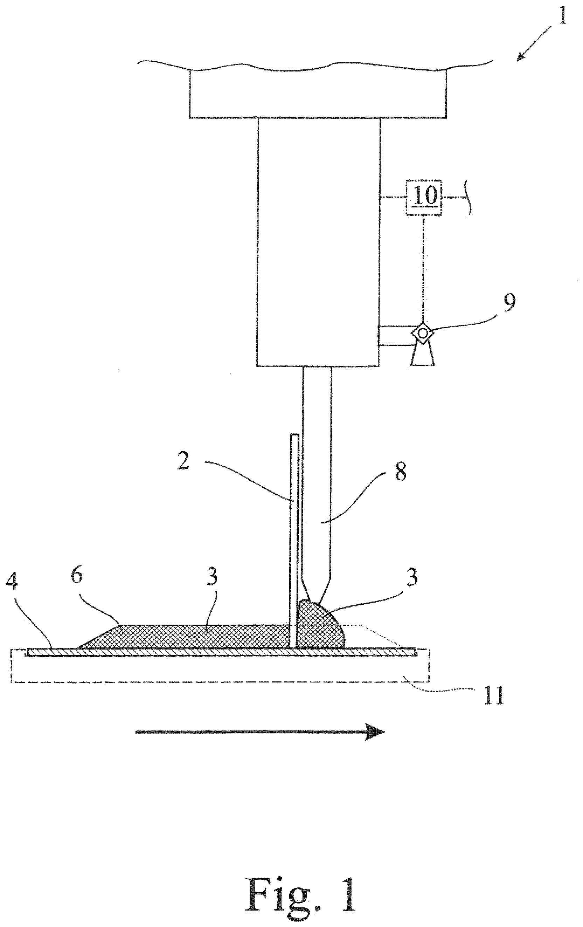

Die Fig. 1 zeigt eine Verstreicheinheit 1 mit einem Formgeber 2 zum Verstreichen von viskosen Material 3 auf einem Bauteil 4.

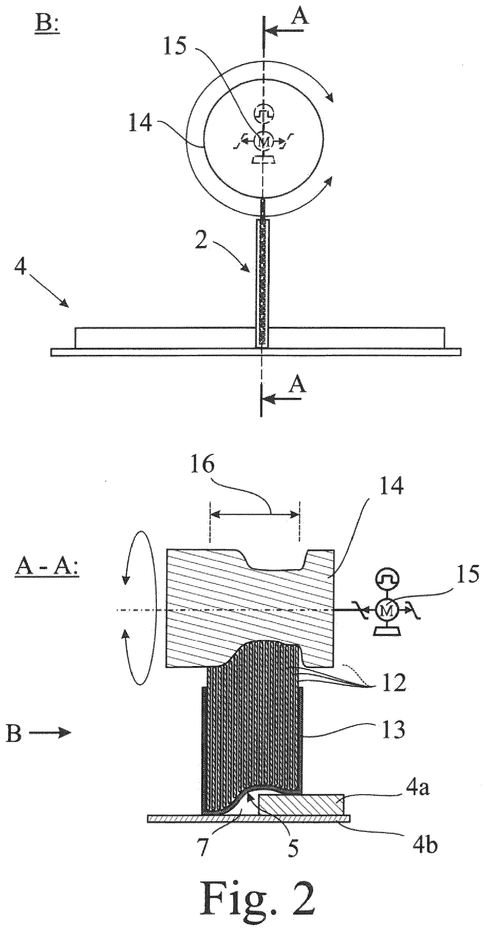

Der Formgeber 2 weist, wie in Fig. 2 gezeigt, eine Formgebungskontur 5 zum Formen des viskosen Materials 3 beim Verstreichen auf. Bei den viskosen Material 3 handelt es sich hier und vorzugsweise um ein Dichtungsmaterial, insbesondere eine Flugzeugdichtmasse oder ein silikonartiges Dichtungsmaterial. Das Bauteil 4 kann insbesondere ein Zusammenbau, vorzugsweise ein Flugzeugstrukturbauteil und/oder ein Kraftfahrzeugteil insbesondere ein Karosseriestrukturbauteil sein.

Die Erfindung hat erkannt, dass, wenn die Formgebungskontur 5 des Formgebers 2 zum Formen des viskosen Materials 3 aktorbasiert verstellbar ist, die Verstreicheinheit 1 sehr vielseitig verwendbar ist. Mit ihr können verschiedene Formen des viskosen Materials 3 erzeugt werden. Vorzugsweise ist es möglich, die Formgebung des viskosen Materials 3 während des Verstreichens zu ändern.

Hier und vorzugsweise wird mit dem Verstreichen des viskosen Materials 3 eine Naht 6 erzeugt. Mit dem viskosen Material 3 kann bspw. eine Fuge 7 in einem Bauteil 4 aufgefüllt und/oder abgedichtet werden. Die Fuge 7 kann bspw. ein Spalt oder eine Kante sein.

Da vorzugsweise mit der Verstreicheinheit 1 die Formgebungskontur 5 des Formgebers 2 zum Formen des viskosen Materials 3 auch während des Verstreichens verstellt werden kann, ist es möglich, Querschnittsänderungen der Naht 6 durch eine Änderung der Formgebungskontur 5 kontinuierlich durchzuführen. Dies kann insbesondere, wenn es sich bei dem Bauteil 4 um ein Flugzeugstrukturbauteil und/oder ein Kraftfahrzeugteil handelt, strömungstechnisch vorteilhaft sein. Der Luftwiderstand kann so aufgrund der Form der Naht beim Fliegen und/oder Fahren reduziert werden kann.

Wie in der Fig. 1 zu sehen ist, weist die Verstreicheinheit 1 vorzugsweise zur Applikation des viskosen Materials 3 auf dem Bauteil eine Düse 8 auf. Die Düse 8 ist bevorzugt in Relativbewegungsrichtung der Verstreicheinheit 1 zum Bauteil 4 vor dem Formgeber 2 angeordnet.

Vorzugsweise ist die Düse 8 in einem vordefinierten festen Abstand zu dem Formgeber 2 angeordnet. Hierdurch kann ein robuster Verstreichprozess gewährleistet werden, denn das viskose Material 3 kann auf dem Wegstück von der Düse 8 zum Formgeber 2 in vordefinierter Weise vorverfestigen und/oder teilaushärten. Im Falle von einem kompressiblen viskosen Material 3 kann sich hierdurch das viskose Material 3 vor dem Formgeben ausdehnen und/oder entspannen. Der Abstand zwischen der Düse 8 und dem Formgeber 2 beträgt vorzugsweise maximal 5 cm, weiter vorzugsweise maximal 3 cm, weiter vorzugsweise maximal 1 cm.

Des Weiteren weist die Verstreicheinheit 1 hier und vorzugsweise einen Sensor 9 zur Erkennung des zu überstreichenden Bereichs, vorzugsweise einer Fuge 7, des Bauteils 4 auf. Der Sensor 9 ist hier und vorzugsweise in Relativbewegungsrichtung vor der Düse 8 und/oder dem Formgeber 2 angeordnet. Beim Verstreichen läuft er der Düse 8 und/oder dem Formgeber 2 hier und vorzugsweise voraus. Vorzugsweise ist der Sensor 9 als optischer Sensor, insbesondere Linienlaser, ausgebildet. Mit einem Linienlaser wird eine sichere Detektion ermöglicht.

Hier und vorzugsweise erfasst der Sensor 9 einen zu überstreichenden Bereich des Bauteils 4 und eine Steuerung 10 wertet die Sensordaten aus. Vorzugsweise wird mittels der Steuerung 10 die Formgebungskontur 5 des Formgebers 2 in Abhängigkeit von den Sensordaten gesteuert und/oder geregelt. Zusätzlich oder alternativ kann die Steuerung 10 in Abhängigkeit von den Sensordaten die Relativbewegung zwischen dem Bauteil 4 und der Verstreicheinheit 1 steuern und/oder regeln. Durch eine Kombination der Steuerung der Relativbewegung und der Formgebungskontur kann die Nahtqualität gesteigert werden. Beispielsweise können Bewegungsabweichungen eines die Verstreicheinheit tragenden Manipulators auf diese Weise durch eine Verstellung der Formgebungskontur kompensiert werden.

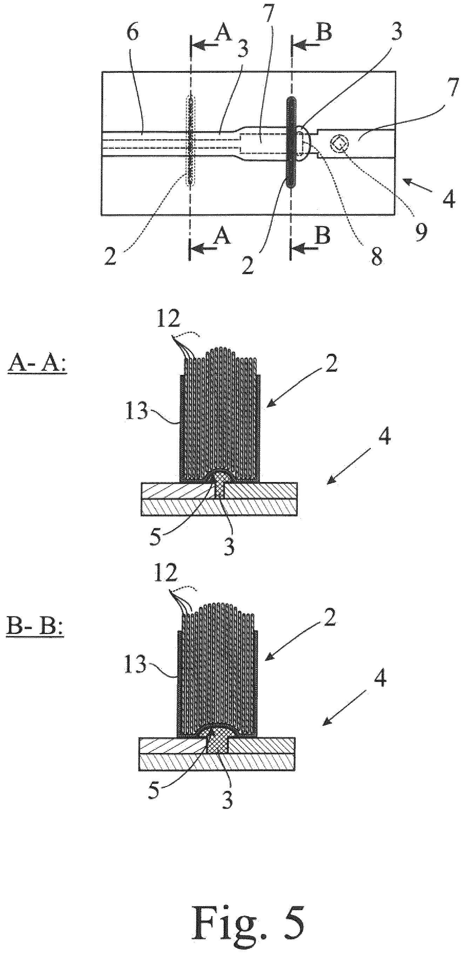

Vorzugsweise weist der zu überstreichende Bereich des Bauteils 4 eine Fuge 7, insbesondere einen Spalt und/oder eine Kante, auf, und die Formgebungskontur 5 wird an die Fuge 7, insbesondere den Spalt und/oder die Kante, angepasst. Dies ist beispielsweise in der Fig. 5 zu sehen.

Eine Naht 6 wird vorzugsweise in der Art hergestellt, dass der Querschnitt am Anfang 6a und/oder Ende 6b der Naht 6 durch eine Änderung der Formgebungskontur 5 verringert wird. Dies gilt insbesondere auch für den Anfang und/oder das Ende einer Naht 6, wenn sie sich im Bereich des Anfangs und/oder Endes mit einer Naht überlappt.

Zusätzlich oder alternativ werden beim Verstreichen Querschnittsänderungen der Naht 6 vorzugsweise durch eine Änderung der Formgebungskontur 5 kontinuierlich durchgeführt. Hierdurch ergibt sich ein besseres Nahtbild.

Zusätzlich oder alternativ kann die Steuerung 10 in Abhängigkeit von den Sensordaten die Relativbewegung zwischen dem Bauteil 4 und der Verstreicheinheit 1 steuern und/oder regeln. Die zum Verstreichen notwendige Relativbewegung zwischen Bauteil 4 und Formgeber 2 kann dabei auf unterschiedliche Arten erzeugt werden. Bspw. kann die Verstreicheinheit 1 , die als Endeffektor ausgebildet ist, relativ zum Bauteil 4 bewegt werden. Zusätzlich oder alternativ kann das Bauteil 4 relativ zum Formgeber 2 bewegt werden. Bspw. kann das Bauteil 4 in einer Bauteilaufnahme 11 aufgenommen werden und die Bauteilaufnahme 11 relativ zum Formgeber 2 bewegt werden. Hierdurch werden jeweils vorschlagsgemäße Systeme gebildet.

Gemäß einer weiteren Ausgestaltung kann vorgesehen sein, dass die Steuerung 10 in Abhängigkeit von den Sensordaten den Volumenstrom und/oder Massenstrom von viskosem Material durch eine Düse 8 auf den zu überstreichenden Bereich regelt und/oder steuert.

Weitet sich bspw. die Fuge 7, so kann der Volumenstrom bzw. Massenstrom erhöht und/oder die Formgebungskontur 5 verstellt und die Fuge 7 befüllt werden, ohne dass die Geschwindigkeit der Relativbewegung angepasst werden muss.

Zusätzlich oder alternativ kann der Volumenstrom bzw. Massenstrom von viskosem Material in Abhängigkeit von der Form der Formgebungskontur 5 und/oder in Abhängigkeit von der Vorschubgeschwindigkeit geregelt und/oder gesteuert werden.

Hier und vorzugsweise kann die Formgebungskontur 5 in der Art verstellt werden, dass die Naht 6 beim Verstreichen konvex und/oder konkav ausgebildet wird. Vorzugsweise kann die Formgebungskontur 5 in der Weise an das Bauteil 4 angepasst verstellt werden, dass die Formgebungskontur 5 eine Öffnung in Form der zu bildenden Naht 6 mit dem Bauteil 4 bildet und an beiden Seiten, insbesondere an den Enden der Formgebungskontur 5, am Bauteil 4 anliegt.

Wie in den Fig. 2 bis 6 gezeigt ist, weist der Formgeber 2 hier und vorzugsweise zur Verstellung der Formgebungskontur 5 aktorbasiert verstellbare Stäbe 12, insbesondere linear verstellbare Stäbe 12, auf. Über die Verstellung von Stäben 12 lassen sich auf ganz einfache Art und Weise verschiedene Formgebungskonturen 5 bereitstellen. Vorzugsweise sind die Stäbe 12 zwischen einer eingefahrenen und einer ausgefahrenen Stellung, insbesondere kontinuierlich, verstellbar.

Hier und vorzugsweise sind die Stäbe 12 aktorbasiert in eine Bewegungsrichtung und die der Bewegungsrichtung entgegengesetzten Richtung verstellbar und/oder in eine Bewegungsrichtung verstellbar und in der Bewegungsrichtung entgegengesetzten Richtung vorgespannt. Auf diese Art und Weise lässt sich eine Linearverstellung auf besonders einfache Weise bereitstellen.

Der Formgeber 2 weist hier und vorzugsweise einen Überzug 13 auf, welcher die Formgebungskontur 5 bereitstellt. Hier und vorzugsweise ist der Überzug 13 über mehrere Stäbe 12, insbesondere alle Stäbe 12, gezogen. Der Überzug 13 besteht vorzugsweise aus einem Elastomer-Material, insbesondere Gummi, und/oder weist ein Elastomer-Material, insbesondere Gummi, auf. Der die Formgebungskontur 5 bildende Bereich des Überzugs 13 ist vorzugsweise verstärkt, insbesondere dicker ausgebildet. Vorzugsweise ist der Überzug lösbar am Formgeber 2 im Übrigen angeordnet. Hierdurch kann er, bspw. wenn ein anderes viskoses Material verwendet werden soll, einfach gewechselt werden.

Hier und vorzugsweise kann die Vorspannung in der der Bewegungsrichtung entgegengesetzten Richtung durch den Überzug 13 bereitgestellt werden.

Gemäß einem Ausführungsbeispiel, wie es schematisch in der Fig. 2 gezeigt ist, weist die Verstreicheinheit 1 eine Konturwelle 14 mit einem Stellantrieb 15 zur Verstellung der Stäbe 12 auf. Die Konturwelle 14 weist einen Verstellabschnitt 16 auf. Der Verstellabschnitt, insbesondere die Konturwelle 14, kann einstückig ausgebildet oder mehrstückig sein. Vorzugsweise wird der Verstellabschnitt durch einzelne Scheiben gebildet. Hierdurch können verschiedene Verstellabschnitte durch wechseln der Scheiben einfach und kostengünstig bereitgestellt werden.

Der Verstellabschnitt 16 befindet sich hier und vorzugsweise im durchgehenden Eingriff mit den Stäben 12. Vorzugsweise variiert der Radius des Verstellabschnitts 16 über dem Umfang und/oder über seine Breite. Die Radiusänderung über den Umfang und/oder die Breite ist vorzugsweise kontinuierlich ausgebildet. Zusätzlich oder alternativ kann der Verstellabschnitt, insbesondere über seine Breite, stufenförmig ausgebildet sein. Dabei weist eine Stufe bevorzugt im Wesentlichen mindestens die Breite eines Stabes 12 auf. Vorzugsweise wird eine Stufe durch eine Scheibe gebildet.

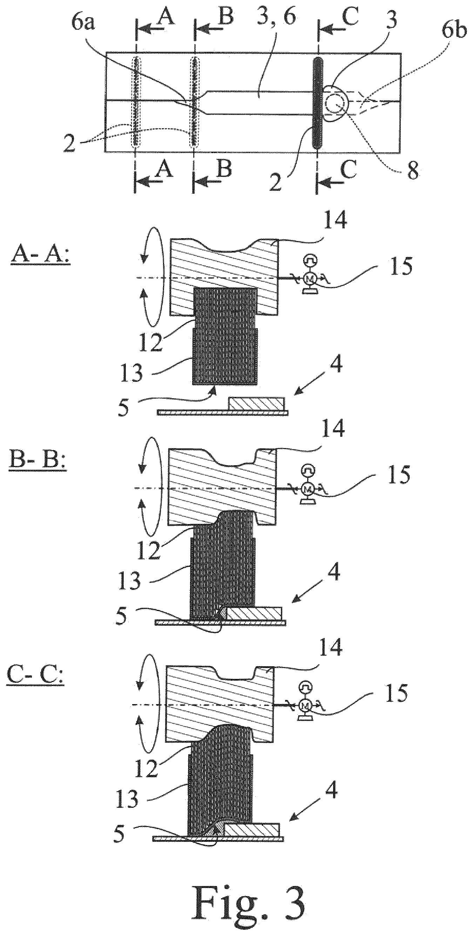

Die Änderung der Formgebungskontur 5 während des Verstreichens soll nachfolgend die Verstreicheinheit 1 des Ausführungsbeispiels der Fig. 2 anhand der Fig. 3 näher erläutert werden.

In der Fig. 3 im oberen Bild ist eine Aufsicht auf ein Bauteil 4 gezeigt. Wie den Schnitten A, B und C entnommen werden kann, weist das Bauteil 4 zwei Teile 4a, 4b auf, welche in Form eines Überlappstoßes miteinander verbunden sind. Das viskose Material 3 soll in die Fuge 7 als Naht 6 aufgetragen werden. Auch die Naht 6 ist dem oberen Bild in der Fig. 3 gut zu entnehmen, sowie die Stellung des Formgebers 2 in drei Positionen beim Verstreichen des viskosen Materials 3.

Im Schnitt A ist eine Stelle zu sehen, in welchem kein viskoses Material 3 aufgetragen werden soll. Hier befindet sich der Formgeber 2 etwas oberhalb des Bauteils 4.

Das Bauteil 4 wird vom Formgeber 2 angefahren und/oder die Formgebungskontur 5 an die zu bildende Naht 6 angepasst.

Die Formgebungskontur 5 wird im Ausführungsbeispiel der Fig. 2 und vorzugsweise durch eine Drehung der Konturwelle 14 gebildet. Beim Verstreichen wird durch eine Drehung der Konturwelle 14 die Form der Naht 6 angepasst. Die Naht 6 wird hier und vorzugsweise kontinuierlich aufgebaut. Der Schnitt B zeigt die Form der Formgebungskontur 5 während des kontinuierlichen Aufbaus der Naht 6. Wenn die Naht 6 in ihrer Form aufgebaut ist, wird, wie im Schnitt C zu erkennen, die Naht 6 kontinuierlich fortgeführt. In diesem Bereich wird hier und vorzugsweise die Formgebungskontur 5 nicht angepasst. Ändert sich jedoch die Fuge 7, kann die Formgebungskontur 5 angepasst werden.

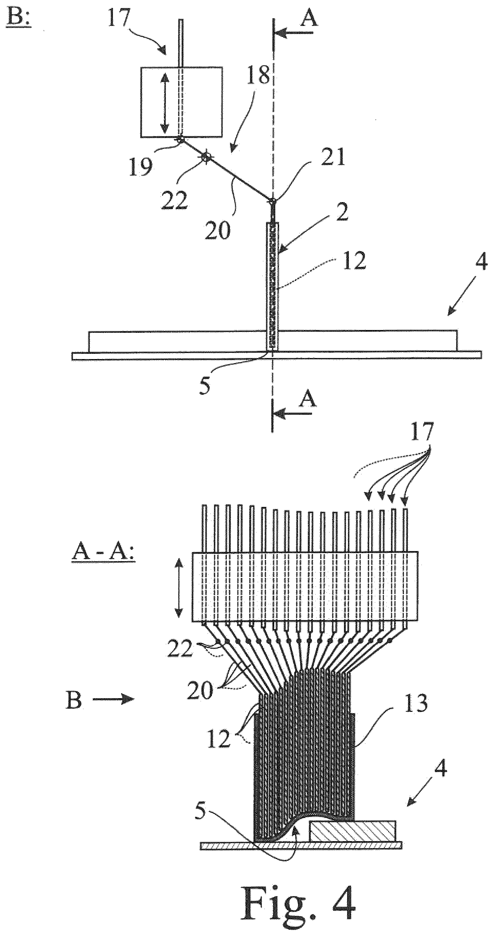

Ein alternatives Ausführungsbeispiel des Formgebers 2 ist in der Fig. 4 gezeigt. Hier erfolgt die Verstellung der Formgebungskontur 5 nicht über eine Konturwelle 14 mit einem Stellantrieb 15. Hier und vorzugsweise erfolgt die Verstellung der Formgebungskontur 5 durch mehrere einzeln angetriebene Stäbe 12. Weiter vorzugsweise ist jeder Stab 12 einzeln angetrieben.

Hier und vorzugsweise werden die Stäbe 12 über Piezoaktoren 17 angetrieben bzw. verstellt. Die Verstellung über Piezoaktoren 17 hat den Vorteil, dass eine Realisierung eines einzelnen Antriebs eines Stabes 12 besonders einfach und platzsparend möglich ist.

Die Piezoaktoren 17 können direkt die Stäbe 12 antreiben. Im Ausführungsbeispiel der Fig. 4 sind die Piezoaktoren nicht direkt an den Stäben 12 angeordnet. Hier und vorzugsweise treiben die Piezoaktoren 17 über ein Hebelgetriebe 18 die Stäbe 12 an.

Hier und vorzugsweise ist der Ausgang des Piezoaktors 17 über ein Gelenk 19 mit einem Hebel 20 des Hebelgetriebes 18 verbunden. Der Piezoaktor 17 wirkt somit über den Hebel 20 auf den Stab 12. Auch der Stab 12 ist hier und vorzugsweise über ein Gelenk 21 mit dem Hebel 20 verbunden. Die Gelenke 19, 21 mit denen die Piezoaktoren 17 und die Stäbe 12 mit dem Hebel 20 verbunden sind, sind hier und vorzugsweise an den Enden des Hebels 20 angeordnet. Zur Bereitstellung einer Übersetzung ist hier und vorzugsweise der Hebel 20 in einem Lager 22 schwenkbar gelagert. Vorzugsweise wird durch dieses eine geringe Bewegung des Piezoaktors 17 in eine größere Bewegung des Stabes 12 gewandelt. Hier und vorzugsweise bewegt sich der Piezoaktor 17 auf einer parallel versetzten Linie zu dem Stab 12 beim Verstellen. Es sind jedoch auch andere Anordnungen denkbar.

Grundsätzlich können mit den Piezoaktoren 17 ebenso Formgebungskonturen 5 erzeugt werden, wie bei dem Ausführungsbeispiel mit der Konturwelle 14 und dem Stellantrieb 15. Insofern wird diesbezüglich auf die vorherigen Ausführungen hierzu verwiesen. Festzustellen ist jedoch, dass ein Formgeber 2 mit Piezoaktoren 17 deutlich flexibler Formgebungskonturen 5 bereitstellen kann, als dies mit einer Konturwelle 14 und dem Stellantrieb 15 möglich ist.

Gemäß eines weiteren in den Figuren nicht gezeigten Ausführungsbeispiels kann die Verstellung der Formgebungskontur 5 mittels Druckluft erfolgen. Dabei können mehrere Stäbe 12 einzeln mit Druckluft angetrieben bzw. verstellt werden, vorzugsweise kann jeder Stab 12 mittels Druckluft angetrieben bzw. verstellt werden.

Bevor nun auf verschiedene mögliche Konturen, in die die Formgebungskontur 5 verstellt werden kann, eingegangen wird, soll noch eine Fuge 7 mit variierender Breite beschrieben werden.

Diese ist in der Fig. 5 gezeigt. Wie der oberen Abbildung zu entnehmen ist, weitet sich die Fuge 7 in zwei Stufen. Durch die verstellbare Formgebungskontur 5 des Formgebers 2 kann die Formgebungskontur 5 an die größere Breite der Fuge 7 angepasst werden, wie dies im Vergleich der beiden Schnitte A bzw. B sichtbar ist. Die Anpassung kann insbesondere auch kontinuierlich erfolgen, um eine durchgehend gute Nahtqualität bereitzustellen. Hier und vorzugsweise erfasst ein Sensor 9 die Fuge 7, insbesondere einen Spalt und/oder eine Kante, an welcher das zu verstreichende viskose Material 3 angebracht werden soll und passt die Formgebungskontur 5 an die Fuge 7, insbesondere den Spalt und/oder die Kante an.

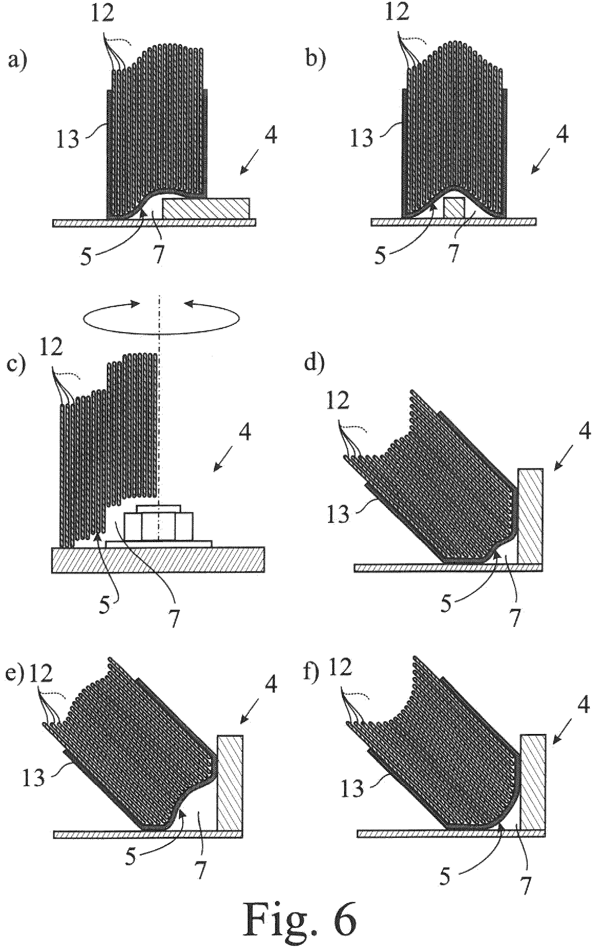

In der Fig. 6 sind verschiedene Formgebungskonturen 5 für verschiedene Anwendungsfälle gezeigt.

In der Fig. 6a wird bspw. ein Überlappstoß durch eine konkave Formgebungskontur 5 mit dem viskosen Material 3 bestrichen.

In der Fig. 6b wird eine konkave Formgebungskontur 5 zum Überstreichen einer lokalen Verstärkung genutzt. Auch hier ist die Formgebungskontur kontinuierlich ausgebildet.

Die Fig. 6c zeigt wiederum den Anwendungsfall eines Versiegelns einer Schraubverbindung und/oder Nietverbindung. Hier und vorzugsweise ist die Formgebungskontur 5 diskontinuierlich ausgebildet. In diesem Ausführumgsbeispiel weist der Formgeber 2 keinen Überzug auf. Je nach Flexibilität des Überzugs 13 sind diskontinuierliche Formübergänge mit einem Überzug 13 möglich. Um ein Versiegeln einer Schraubverbindung zu ermöglichen, ist die Verstreicheinheit 1 hier und vorzugsweise rotatorisch, insbesondere um eine zu den Stäben 12 parallele Rotationsachse, bewegbar. Alternativ können Schraubverbindungen und/oder Nietverbindungen auch durch eine Linearbewegung versiegelt werden. Vorzugsweise erfolgt die Versiegelung hier durch ein, insbesondere mittiges, überstreichen der Verstreicheinheit 1 über die Schraubverbindung oder den Niet, vorzugsweise mit einer, insbesondere kontinuierlichen, Anpassung der Formgebungskontur an die Niet- oder Schraubverbindung.

In den Fig. 6d und 6e sind zwei im Bereich des viskosen Materialauftrags im Wesentlichen konkave Formgebungskonturen zum Verstreichen des viskosen Materials 3 im Bereich eines Eckstoßes gezeigt. Sie erzeugen eine konvexe Naht. Sie unterscheiden sich im Wesentlich dadurch, dass die Anlagen in den Seitenbereichen des Formgebers unterschiedlich groß sind und entsprechend unterschiedliche dicke Nähte erzeugt werden.

In der Fig. 6f ist eine im Bereich des viskosen Materialauftrags im Wesentlichen konvexe Formgebungskontur zum Verstreichen des viskosen Materials 3 im Bereich eines Eckstoßes gezeigt. In Fig. 6f wird eine konkave Naht erzeugt.

Alle in Zusammenhang mit der Verstreicheinheit beschriebenen Merkmale können auch verfahrensmäßig in dem vorschlagsgemäßen Verfahren angewendet werden. Auch die verfahrensmäßig beschriebenen Merkmale können bei der Verstreicheinheit vorgesehen sein. Das gleiche gilt für das vorschlagsgemäße System. Insofern wird wechselseitig auf die Ausführungen zur der Verstreicheinheit, die Ausführungen zu dem System und die Ausführungen zu dem Verfahren verwiesen.

## Patentansprüche

1. System zum Verstreichen von viskosem Material (3) auf einem Bauteil (4), wobei das System eine Bauteilaufnahme (11) zur Aufnahme eines Bauteils (4) aufweist, wobei das System einen Manipulator mit einer Verstreicheinheit (1) als Endeffektor aufweist, wobei die Verstreicheinheit einen Formgeber (2) zum Verstreichen von viskosem Material (3), insbesondere Dichtungsmaterial, auf dem Bauteil (4) aufweist, wobei der Formgeber (2) eine Formgebungskontur (5) zum Formen des viskosen Materials (3) beim Verstreichen aufweist,
**dadurch gekennzeichnet,**
**dass** die Formgebungskontur (5) des Formgebers (2) zum Formen des viskosen Materials (3) aktorbasiert verstellbar ist.

2. System nach Anspruch 1, **dadurch gekennzeichnet, dass** die Verstreicheinheit (1) eine Düse (8) zur Applikation des viskosen Materials (3), insbesondere des Dichtungsmaterials, auf dem Bauteil (4) aufweist.

3. System nach Anspruch 1 oder 2, **dadurch gekennzeichnet, dass** die Verstreicheinheit (1) einen Sensor (9), insbesondere einen Linienlaser, zur Erkennung des zu überstreichenden Bereichs des Bauteils (4) aufweist.

4. System nach einem der vorhergehenden Ansprüche, **dadurch gekennzeichnet, dass** der Formgeber (2) aktorbasiert verstellbare, insbesondere linear verstellbare, Stäbe (12) zur Verstellung der Formgebungskontur (5) aufweist.

5. System nach Anspruch 4, **dadurch gekennzeichnet, dass** die Stäbe (12) aktorbasiert in eine Bewegungsrichtung und die der Bewegungsrichtung entgegengesetzten Richtung verstellbar sind und/oder dass die Stäbe (12) aktorbasiert in eine Bewegungsrichtung verstellbar sind und in der Bewegungsrichtung entgegengesetzten Richtung vorgespannt sind.

6. System nach einem der vorhergehenden Ansprüche, **dadurch gekennzeichnet, dass** der Formgeber (2) einen Überzug (13) aufweist, welcher die Formgebungskontur (5) bereitstellt, vorzugsweise, dass der Überzug (13) aus Elastomer-Material besteht und/oder Elastomer-Material aufweist.

7. System nach einem der Ansprüche 4 bis 6, **dadurch gekennzeichnet, dass** die Verstreicheinheit (1) eine Konturwelle (14) mit einem Stellantrieb (15) zur Verstellung der Stäbe (12) aufweist.

8. System nach einem der Ansprüche 4 bis 7, **dadurch gekennzeichnet, dass** zur Verstellung der Formgebungskontur (5) mehrere Stäbe (12), insbesondere jeder Stab (12), einzeln angetrieben sind bzw. ist.

9. System nach einem der Ansprüche 4 bis 8, **dadurch gekennzeichnet, dass** die Stäbe (12) über Piezoaktoren (17) verstellbar sind.

10. Verfahren zum Verstreichen eines viskosen Materials (3) auf einem Bauteil (4) mittels eines Systems nach einem der vorhergehenden Ansprüche ,
**dadurch gekennzeichnet,**
**dass** die Formgebungskontur (5) des Formgebers (2) zum Ändern der Form des viskosen Materials (3) aktorbasiert verstellt wird.

11. Verfahren nach Anspruch 10, **dadurch gekennzeichnet, dass** ein Sensor (9), insbesondere einen Linienlaser, einen zu überstreichenden Bereich des Bauteils (4) erfasst und die Sensordaten von einer Steuerung (10) ausgewertet werden, vorzugsweise, dass mittels der Steuerung (10) die Formgebungskontur (5) des Formgebers (2) in Abhängigkeit von den Sensordaten gesteuert und/oder geregelt wird.

12. Verfahren nach Anspruch 11, **dadurch gekennzeichnet, dass** die Steuerung (10) in Abhängigkeit von den Sensordaten die Relativbewegung zwischen dem Bauteil (4) und der Verstreicheinheit (1) steuert und/oder regelt.

13. Verfahren nach Anspruch 11 oder 12, **dadurch gekennzeichnet, dass** die Steuerung (10) in Abhängigkeit von den Sensordaten den Volumenstrom und /oder Massenstrom von viskosem Material (3) durch eine Düse (8) auf den zu überstreichenden Bereich geregelt und/oder gesteuert wird.

14. Verfahren nach einem der Ansprüche 10 bis 13, **dadurch gekennzeichnet, dass** der zu überstreichende Bereich des Bauteils (4) eine Fuge (7), insbesondere einen Spalt und/oder eine Kante, aufweist, und dass die Formgebungskontur (5) an die Fuge (7), insbesondere den Spalt und/oder die Kante, angepasst wird.

15. Verfahren nach einem der Ansprüche 10 bis 14, **dadurch gekennzeichnet, dass** mit dem verstreichen des viskosen Materials (2) eine Naht (6) erzeugt wird, vorzugsweise, dass der Querschnitt am Anfang und/oder Ende der Naht (6) durch eine Änderung der Formgebungskontur (5) verringert wird.

16. Verfahren nach Anspruch 15, **dadurch gekennzeichnet, dass** beim Verstreichen Querschnittsänderungen der Naht (6) durch eine Änderung der Formgebungskontur (5) kontinuierlich durchgeführt werden.

## Claims

1. System for spreading viscous material (3) on a component (4), wherein the system has a component receptacle (11) for receiving a component (4), wherein the system has a manipulator having a spreading unit (1) as end effector, wherein the spreading unit has a shaper (2) for spreading viscous material (3), in particular sealing material, on the component (4), wherein the shaper (2) has a shaping contour (5) for shaping the viscous material (3) during the spreading,
**characterized**
**in that** the shaping contour (5) of the shaper (2) for shaping the viscous material (3) is adjustable in an actuator-based manner.

2. System according to Claim 1, **characterized in that** the spreading unit (1) has a nozzle (8) for applying the viscous material (3), in particular the sealing material, on the component (4).

3. System according to Claim 1 or 2, **characterized in that** the spreading unit (1) has a sensor (9), in particular a line laser, for detecting that region of the component (4) which is to be coated.

4. System according to one of the preceding claims, **characterized in that** the shaper (2) has rods (12), which are adjustable in an actuator-based manner, in particular are linearly adjustable, for the adjustment of the shaping contour (5).

5. System according to Claim 4, **characterized in that** the rods (12) are adjustable in an actuator-based manner in a movement direction and in the direction opposite to the movement direction, and/or **in that** the rods (12) are adjustable in an actuator-based manner in a movement direction and are preloaded in the direction opposite to the movement direction.

6. System according to one of the preceding claims, **characterized in that** the shaper (2) has a casing (13), which provides the shaping contour (5), preferably **in that** the casing (13) consists of elastomer material and/or comprises elastomer material.

7. System according to one of Claims 4 to 6, **characterized in that** the spreading unit (1) has a contour shaft (14) having an actuating drive (15) for the adjustment of the rods (12).

8. System according to one of Claims 4 to 7, **characterized in that**, for the adjustment of the shaping contour (5), a plurality of rods (12), in particular each rod (12), are/is individually driven.

9. System according to one of Claims 4 to 8, **characterized in that** the rods (12) are adjustable via piezo actuators (17).

10. Method for spreading a viscous material (3) on a component (4) by means of a system according to one of the preceding claims,
**characterized**
**in that** the shaping contour (5) of the shaper (2) for changing the shape of the viscous material (3) is adjusted in an actuator-based manner.

11. Method according to Claim 10, **characterized in that** a sensor (9), in particular a line laser, detects a region to be coated of the component (4), and the sensor data are analysed by a control system (10), preferably **in that** the control system (10) is used to control and/or regulate the shaping contour (5) of the shaper (2) in dependence on the sensor data.

12. Method according to Claim 11, **characterized in that** the control system (10) controls and/or regulates the relative movement between the component (4) and the spreading unit (1) in dependence on the sensor data.

13. Method according to Claim 11 or 12, **characterized in that** the control system (10) regulates and/or controls, in dependence on the sensor data, the volume flow and/or mass flow of viscous material (3) through a nozzle (8) onto the region to be coated.

14. Method according to one of Claims 10 to 13, **characterized in that** that region of the component (4) which is to be coated has a joint (7), in particular a gap and/or an edge, and **in that** the shaping contour (5) is adapted to the joint (7), in particular the gap and/or the edge.

15. Method according to one of Claims 10 to 14, **characterized in that**, with the spreading of the viscous material (2), a seam (6) is produced, preferably **in that** the cross section at the start and/or end of the seam (6) is reduced by alteration of the shaping contour (5).

16. Method according to Claim 15, **characterized in that**, during the spreading, cross-sectional changes of the seam (6) are continuously performed by alteration of the shaping contour (5).

## Revendications

1. Système pour étaler un matériau visqueux (3) sur un composant (4), le système présentant un réceptacle de composant (11) pour recevoir un composant (4), le système présentant un manipulateur comprenant une unité d'étalement (1) en tant qu'effecteur terminal, l'unité d'étalement présentant un dispositif de mise en forme (2) pour étaler un matériau visqueux (3), notamment un matériau d'étanchéité, sur le composant (4), le dispositif de mise en forme (2) présentant un contour de mise en forme (5) pour mettre en forme le matériau visqueux (3) lors de l'étalement,
**caractérisé en ce que**
le contour de mise en forme (5) du dispositif de mise en forme (2) pour mettre en forme le matériau visqueux (3) est réglable sur la base d'un actionneur.

2. Système selon la revendication 1, **caractérisé en ce que** l'unité d'étalement (1) présente une buse (8) pour appliquer le matériau visqueux (3), notamment le matériau d'étanchéité, sur le composant (4).

3. Système selon la revendication 1 ou 2, **caractérisé en ce que** l'unité d'étalement (1) présente un capteur (9), notamment un laser linéaire, pour détecter la zone à couvrir du composant (4).

4. Système selon l'une quelconque des revendications précédentes, **caractérisé en ce que** le dispositif de mise en forme (2) présente des barres (12) réglables sur la base d'un actionneur, notamment réglables linéairement, pour le réglage du contour de mise en forme (5).

5. Système selon la revendication 4, **caractérisé en ce que** les barres (12) sont réglables sur la base d'un actionneur dans une direction de déplacement et dans la direction opposée à la direction de déplacement et/ou **en ce que** les barres (12) sont réglables sur la base d'un actionneur dans une direction de déplacement et sont précontraintes dans la direction opposée à la direction de déplacement.

6. Système selon l'une quelconque des revendications précédentes, **caractérisé en ce que** le dispositif de mise en forme (2) présente un revêtement (13), qui fournit le contour de mise en forme (5), de préférence **en ce que** le revêtement (13) est constitué d'un matériau élastomère et/ou présente un matériau élastomère.

7. Système selon l'une quelconque des revendications 4 à 6, **caractérisé en ce que** l'unité d'étalement (1) présente un arbre de contour (14) avec un servoentraînement (15) pour le réglage des barres (12).

8. Système selon l'une quelconque des revendications 4 à 7, **caractérisé en ce que** plusieurs barres (12), notamment chaque barre (12), sont ou est entraînée (s) individuellement pour le réglage du contour de mise en forme (5).

9. Système selon l'une quelconque des revendications 4 à 8, **caractérisé en ce que** les barres (12) sont réglables par l'intermédiaire d'actionneurs piézoélectriques (17).

10. Procédé pour étaler un matériau visqueux (3) sur un composant (4) au moyen d'un système selon l'une quelconque des revendications précédentes,
**caractérisé en ce que**
le contour de mise en forme (5) du dispositif de mise en forme (2) est réglé sur la base d'un actionneur pour modifier la forme du matériau visqueux (3).

11. Procédé selon la revendication 10, **caractérisé en ce qu'**un capteur (9), notamment un laser linéaire, détecte une zone à couvrir du composant (4), et les données du capteur sont évaluées par un dispositif de commande (10), de préférence **en ce que** le contour de mise en forme (5) du dispositif de mise en forme (2) est commandé et/ou régulé au moyen du dispositif de commande (10) en fonction des données du capteur.

12. Procédé selon la revendication 11, **caractérisé en ce que** le dispositif de commande (10) commande et/ou régule le déplacement relatif entre le composant (4) et l'unité d'étalement (1) en fonction des données du capteur.

13. Procédé selon la revendication 11 ou 12, **caractérisé en ce que** le dispositif de commande (10) régule et/ou commande, en fonction des données du capteur, le débit volumique et/ou le débit massique de matériau visqueux (3) à travers une buse (8) sur la zone à couvrir.

14. Procédé selon l'une quelconque des revendications 10 à 13, **caractérisé en ce que** la zone à couvrir du composant (4) présente une fente (7), notamment un interstice et/ou une arête, et **en ce que** le contour de mise en forme (5) est adapté à la fente (7), notamment à l'interstice et/ou à l'arête.

15. Procédé selon l'une quelconque des revendications 10 à 14, **caractérisé en ce qu'**un joint (6) est produit avec l'étalement du matériau visqueux (2), de préférence **en ce que** la section transversale au début et/ou à la fin du joint (6) est réduite par une modification du contour de mise en forme (5).

16. Procédé selon la revendication 15, **caractérisé en ce que**, lors de l'étalement, des modifications de la section transversale du joint (6) sont effectuées en continu par une modification du contour de mise en forme (5).
